# EUROPEAN PATENT APPLICATION

(11) **EP 4 290 779 A1**
(43) Date of publication of application: **13.12.2023**
(21) Application number: 22749648.6
(22) Date of filing: 31.01.2022
(51) Int. Cl.: H04B 7/024, H04B 7/06, H04B 7/08, H04L 27/26

(54) **TERMINAL, WIRELESS COMMUNICATION METHOD, AND BASE STATION**

(30) Priority: 03.02.2021 JP 2021015942
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/003542
(87) International publication number: WO 2022/168776

(57) **Abstract**

A terminal according to an aspect of the present disclosure includes: a receiving section that receives downlink control information to schedule a physical downlink shared channel; and a control section that determines whether to apply a scheme for high-speed moving to the physical downlink shared channel, based on the downlink control information. According to an aspect of the present disclosure, it is possible to appropriately receive downlink signals from a plurality of transmission points.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed, in future radio communication systems (for example, NR), to use a beam transmitted from a transmission point (for example, a Remote Radio Head (RRH)) arranged in a path of a moving object moving at a high speed (for example, a train or the like) to implement radio communication in the moving object.

However, it is not sufficiently studied how the terminal receives a downlink signal transmitted from a plurality of transmission points. Unless such operation is made clear, throughput may degrade, for example.

Thus, an object of the present disclosure is to provide a terminal, a radio communication method, and a base station that appropriately receive downlink signals from a plurality of transmission points.

### Solution to Problem

A terminal according to an aspect of the present disclosure includes: a receiving section that receives downlink control information to schedule a physical downlink shared channel; and a control section that determines whether to apply a scheme for high-speed moving to the physical downlink shared channel, based on the downlink control information.

### Advantageous Effects of Invention

According to an aspect of the present disclosure, it is possible to appropriately receive downlink signals from a plurality of transmission points.

### Brief Description of Drawings

FIGS. 1A and 1B are each a diagram to show an example of communication between a moving object and transmission points (for example, RRHs);
FIGS. 2A to 2C are diagrams to show an example of schemes 0 to 2 related to an SFN;
FIGS. 3A and 3B are diagrams to show an example of scheme 1;
FIGS. 4A to 4C are diagrams to show an example of a NW pre-compensation scheme;
FIG. 5 is a diagram to show an example of Aspect 1-1;
FIG. 6 is a diagram to show a variation of Aspect 1-3;
FIG. 7 is a diagram to show an example of a second embodiment;
FIGS. 8A and 8B are each a diagram to show an example of Doppler shift of a DL reception signal according to the second embodiment;
FIG. 9 is a diagram to show an example of Aspect 3-1;
FIGS. 10A and 10B are diagrams to show an example of a fourth embodiment;
FIG. 11 is a diagram to show an example of a schematic structure of a radio communication system according to one embodiment;
FIG. 12 is a diagram to show an example of a structure of a base station according to one embodiment;
FIG. 13 is a diagram to show an example of a structure of a user terminal according to one embodiment; and
FIG. 14 is a diagram to show an example of a hardware structure of the base station and the user terminal according to one embodiment.

### Description of Embodiments

### (TCI, Spatial Relation, QCL)

For NR, it has been studied to control reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, and the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (or a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or a spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS having a TCI state of QCL type X may mean an RS having a relationship of QCL type X with (a DMRS of) a certain channel/signal, and this RS may be referred to as a QCL source having the TCI state of QCL type X.

### (Default TCI State / Default Spatial Relation / Default PL-RS)

In an RRC connected mode, when a time offset between reception of DL DCI (DCI to schedule a PDSCH) and a corresponding PDSCH (the PDSCH scheduled by the DCI) is smaller than a threshold (timeDurationForQCL) in both cases where TCI information in DCI (a higher layer parameter TCI-PresentInDCI) is set at "enabled" and where TCI information in DCI is not configured (application condition, first condition), the TCI state of the PDSCH (default TCI state) may be a TCI state with the lowest CORESET ID in the latest slot in an active DL BWP of the CC of the PDSCH (of a specific UL signal) if non-cross-carrier scheduling is employed. Otherwise, the TCI state of the PDSCH (default TCI state) may be a TCI state of the lowest TCI state ID of the scheduled PDSCH in the active DL BWP of the CC.

In Rel. 15, separate MAC CEs including a MAC CE for activation/deactivation of a PUCCH spatial relation and a MAC CE for activation/deactivation of an SRS spatial relation are necessary. A PUSCH spatial relation depends on an SRS spatial relation.

In Rel. 16, at least one of a MAC CE for activation/deactivation of a PUCCH spatial relation and a MAC CE for activation/deactivation of an SRS spatial relation need not necessarily be used.

If neither a spatial relation nor a PL-RS for a PUCCH is configured (application condition, second condition) in FR2, default assumptions of the spatial relation and the PL- RS (default spatial relation and default PL-RS) are used for the PUCCH. If neither a spatial relation nor a PL-RS for an SRS (an SRS resource for the SRS or an SRS resource corresponding to an SRI in DCI format 0_1 scheduling a PUSCH) is configured in FR2 (application condition, second condition), the default assumptions of the spatial relation and the PL- RS (default spatial relation and default PL-RS) are used for the PUSCH scheduled by DCI format 0_1 and the SRS.

If a CORESET is configured in the active DL BWP of the CC (application condition), the default spatial relation and the default PL-RS may be a TCI state or a QCL assumption of a CORESET having the lowest CORESET ID in the active DL BWP. If a CORESET is not configured in the active DL BWP of the CC, the default spatial relation and the default PL-RS may be an active TCI state having the lowest ID of the PDSCH in the active DL BWP.

In Rel. 15, the spatial relation of a PUSCH scheduled by DCI format 0_0 depends on the spatial relation of a PUCCH resource having the lowest PUCCH resource ID among active spatial relations of PUCCHs of in the same CC. Even when no PUCCH is transmitted in an SCell, a network need update all the PUCCH spatial relations in the SCell.

In Rel. 16, a PUCCH configuration for a PUSCH scheduled by DCI format 0_0 is not needed. When no active PUCCH spatial relation is present or no PUCCH resource is present in an active UL BWP in the CC for the PUSCH scheduled by DCI format 0_0 (application condition, second condition), the default spatial relation and the default PL-RS are used for the PUSCH.

An application condition of a default spatial relation / default PL-RS for an SRS may include a default beam pathloss enable information element for an SRS (higher layer parameter enableDefaultBeamPlForSRS) being set to "enabled." An application condition of a default spatial relation / default PL-RS for a PUCCH may include a default beam pathloss enable information element for a PUCCH (higher layer parameter enableDefaultBeamPlForPUCCH) being set to "enabled." An application condition of a default spatial relation / default PL-RS for a PUSCH scheduled by DCI format 0_0 may include a default beam pathloss enable information element for a PUSCH scheduled by DCI format 0_0 (higher layer parameter enableDefaultBeamPlForPUSCH0_0) being set to "enabled."

The threshold may be referred to as a time duration for QCL, "timeDurationForQCL," "Threshold," "Threshold for offset between a DCI indicating a TCI state and a PDSCH scheduled by the DCI," "Threshold-Sched-Offset," a schedule offset threshold, a scheduling offset threshold, and the like.

In a case where an offset between reception of DL DCI and a corresponding PDSCH is smaller than a threshold timeDurationForQCL, where at least one TCI state configured for a serving cell of a scheduled PDSCH includes "QCL type D," where a UE is configured with two default TCI enable parameters (enableTwoDefaultTCIStates-r16), and where at least one TCI codepoint indicates two TCI states, the UE assumes the PDSCH of the serving cell or a DMRS port of a PDSCH transmission occasion is QCLed (quasi co-located) with an RS related to a QCL parameter associated with the two TCI states corresponding to the lowest codepoint among TCI codepoints each including two different TCI states. The two default TCI enable parameters indicate that operation of Rel. 16 for two default TCI states for a PDSCH of a case where at least one TCI codepoint is mapped in the two TCI states.

### (Multi-TRP)

For NR, it is studied that one or a plurality of transmission/reception points (TRPs) (multi-TRP (multi TRP (MTRP))) performs DL transmission to a UE by using one or a plurality of panels (multi-panel). It is also studied that a UE performs UL transmission to one or a plurality of TRPs by using one or a plurality of panels.

Note that the plurality of TRPs may correspond to the same cell identifier (ID) or may correspond to different cell IDs. Each cell ID may be a physical cell ID or may be a virtual cell ID.

The multi-TRP (for example, TRPs #1 and #2) may be connected through an ideal/non-ideal backhaul to exchange information, data, and the like. Different codewords (Code Words (CWs)) and different layers may be transmitted from the respective TRPs of the multi-TRP. As one mode of multi-TRP transmission, non-coherent joint transmission (NCJT) may be used.

In NCJT, for example, TRP #1 performs modulation mapping on a first codeword and performs layer mapping to transmit a first number of layers (for example, two layers) a first PDSCH by using first precoding. TRP #2 performs modulation mapping on a second codeword and performs layer mapping to transmit a second number of layers (for example, two layers) a second PDSCH by using second precoding.

Note that the plurality of PDSCHs (multi-PDSCH) transmitted by NCJT may be defined to partially or entirely overlap each other in terms of at least one of the time domain and the frequency domain. In other words, the first PDSCH from the first TRP and the second PDSCH from the second TRP may overlap each other in at least one of the time domain and the frequency domain.

The first PDSCH and the second PDSCH may be assumed not to have a quasi-co-location (QCL) relationship (not quasi-co-located). Reception of multi-PDSCH may be interpreted as simultaneous reception of PDSCHs that are not of a certain QCL type (for example, QCL type D).

A plurality of PDSCHs (which may be referred to as a multi-PDSCH (multiple PDSCHs)) from the multi-TRP may be scheduled by using one piece of DCI (a single piece of DCI, a single PDCCH) (single-master mode, multi-TRP based on a single piece of DCI (single-DCI based multi-TRP)). A plurality of PDSCHs from the multi-TRP may be scheduled by using a plurality of respective pieces of DCI (multi-DCI, multi-PDCCH (multiple PDCCHs)) (multi-master mode, multi-TRP based on multi-DCI (multi-DCI based multi-TRP)).

It is studied to support PDSCH (transport block (TB) or codeword (CW)) repetition using multi-TRP, in URLLC for multi-TRP. It is studied to support schemes of repetition using multi-TRP in the frequency domain, layer (spatial) domain, or time domain (URLLC schemes, for example, schemes 1, 2a, 2b, 3, and 4). In scheme 1, multi-PDSCH from multi-TRP is multiplexed by space division multiplexing (SDM). In schemes 2a and 2b, PDSCHs from multi-TRP are multiplexed by frequency division multiplexing (FDM). In scheme 2a, redundancy versions (RVs) are the same for the multi-TRP. In scheme 2b, RVs may be the same for or different among the multi-TRP. In schemes 3 and 4, multi-PDSCH from multi-TRP is multiplexed by time division multiplexing (TDM). In scheme 3, multi-PDSCH from multi-TRP is transmitted in one slot. In scheme 4, multi-PDSCH from multi-TRP is transmitted in different slots.

According to such a multi-TRP scenario, more flexible transmission control using channels of high quality is possible.

To support intra-cell (having the same cell ID) or inter-cell (having different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of PDCCHs and PDSCHs with a plurality of TRPs.

In a case where at least one of conditions 1 and 2 below is satisfied, the UE may determine that the case uses multi-TRP based on multi-DCI. In this case, each TRP may be interpreted as a CORESET pool index.

### {Condition 1}

One CORESET pool index is configured.

### {Condition 2}

Two different values (for example, 0 and 1) of CORESET pool indices are configured.

In a case where the following condition is satisfied, the UE may determine that the case uses multi-TRP based on a single piece of DCI. In this case, two TRPs may be interpreted as two TCI states indicated by a MAC CE / DCI.

### {Condition}

To indicate one or two TCI states for one codepoint of a TCI field in DCI, an "enhanced TCI states activation/deactivation for UE-specific PDSCH MAC CE" is used.

DCI for common beam indication may be of a UE-specific DCI format (for example, a DL DCI format (for example, 1_1, 1_2)) or a UL DCI format (for example, 0_1, 0_2), or may be a UE-group common DCI format.

### (HST)

In LTE, arrangement in a tunnel for an HST is difficult. A large antenna performs transmission to the outside/inside of a tunnel. For example, transmit power of such a large antenna is approximately 1 to 5 W. For handover, it is important for a UE to perform transmission to the outside of the tunnel before entering a tunnel. For example, transmit power of a small antenna is approximately 250 mW. A plurality of small antennas (transmission/reception points) having the same cell ID and having a distance of 300 m form a single frequency network (SFN). All the small antennas in the SFN transmit the same signal at the same time in the same PRB. A terminal assumes to perform transmission/reception to/from one base station. In actual, the plurality of transmission/reception points transmit the same DL signal. At high-speed moving, transmission/reception points in a unit of several kilometers form one cell. When the terminal moves from one cell to another, handover is performed. In this way, the frequency of handover can be reduced.

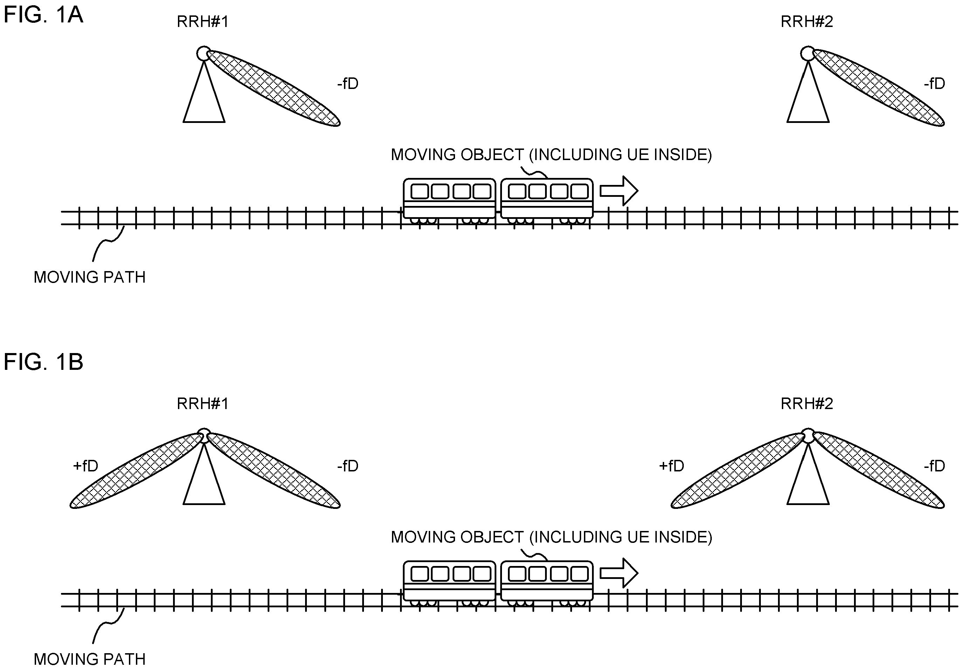

In NR, it is assumed to use a beam transmitted from a transmission point (for example, an RRH) to perform communication with a terminal (also referred to as a UE below) included in a moving object such as a train moving at a high speed (HST (high speed train)). In an existing system (for example, Rel. 15), performing communication with the moving object by transmitting uni-directional beams from the RRHs is supported (see FIG. 1A).

FIG. 1A shows a case where RRHs are installed along a moving path (or in a moving direction, in a traveling direction, or along a traveling path) of a moving object, and a beam is formed from each RRH on the traveling direction side of the moving object. Such an RRH forming a uni-directional beam may be referred to as a uni-directional RRH. In the example shown in FIG. 1A, the moving object is subjected to negative Doppler shift (-f_{D}) from each RRH.

Note that a case where a beam is formed on the traveling direction side of the moving object is shown here, but, without limited to this, a beam may be formed on the opposite direction side of the traveling direction or may be formed in any of various directions with no relation to the traveling direction of the moving object.

In Rel. 16 or later versions, it is also assumed that a plurality (for example, two or more) of beams are formed from each RRH. For example, it is assumed that beams are formed in both the traveling direction of the moving object and the opposite direction (refer to FIG. 1B).

FIG. 1B shows a case where the RRHs are installed along the moving path of the moving object, and beams are formed from each RRH on both of the traveling direction side of the moving object and the opposite direction side to the traveling direction. Such an RRH forming beams in a plurality of directions (for example, two directions) may be referred to as a bi-directional RRH.

In the HST, the UE performs communication similarly to a single TRP. In a base station implementation, transmission is possible from a plurality of TRPs (same cell ID).

In the example shown in FIG. 1B, in a case where two RRHs (here, RRH #1 and RRH #2) use an SFN, a signal subjected to negative Doppler shift is switched to a signal subjected to positive Doppler shift to have a higher power, when the moving object is in the middle of the two RRHs. In this case, the maximum change width of Doppler shift necessary to have compensation is the change from -f_{D} to +f_{D}, which is twice as large as that of a case of a uni-directional RRH.

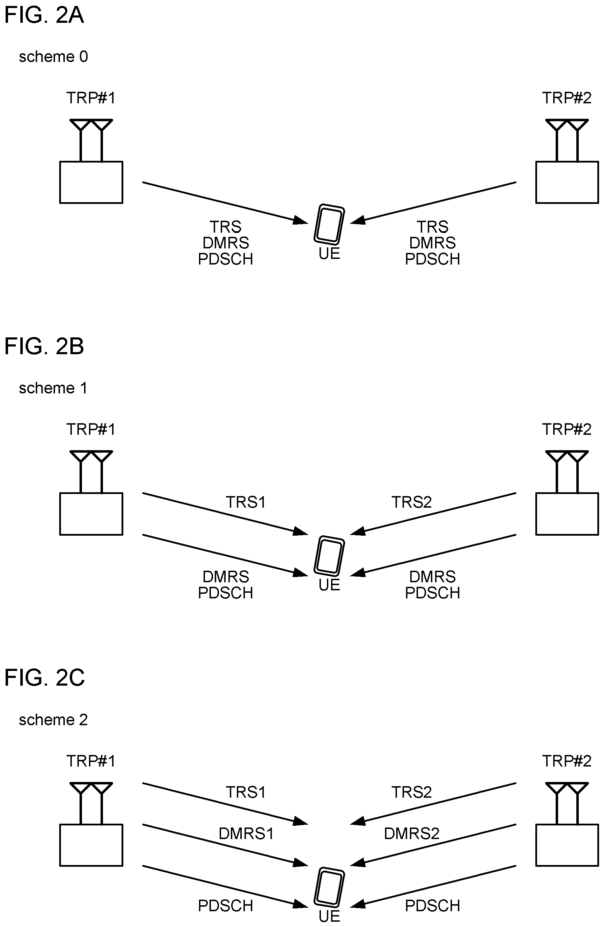

Here, scheme 0 to scheme 2 below will be compared. In scheme 0 in FIG. 2A, a tracking reference signal (TRS), a DMRS, and a PDSCH are transmitted to two TRPs (RRHs) in common (by using the same time and frequency resources) (normal SFN, transparent SFN). In scheme 1 in FIG. 2B, TRSs are transmitted in a TRP-specific manner (by using different time/frequency resource for each TRP). In this example, TRS 1 is transmitted from TRP #1, and TRS 2 is transmitted from TRP #2. In scheme 2 in FIG. 2C, TRSs and DMRSs are transmitted in a TRP-specific manner. In this example, TRS 1 and DMRS 1 are transmitted from TRP #1, and TRS 2 and DMRS 2 are transmitted from TRP #2. In schemes 1 and 2, compared to scheme 0, a rapid change of Doppler shift is suppressed, which allows appropriate estimation/securement of Doppler shift. Since the number of DMRSs in scheme 2 increases from the number of DMRSs in scheme 1, the maximum throughput of scheme 2 decreases from that of scheme 1.

In scheme 0, the UE switches between a single TRP and an SFN, based on a higher layer signaling (RRC information element / MAC CE) .

The UE may switch between scheme 1 / scheme 2 / NW pre-compensation scheme, based on higher layer signaling (RRC information element / MAC CE).

In scheme 1, two TRS resources are configured for each of the traveling direction of an HST and the opposite direction.

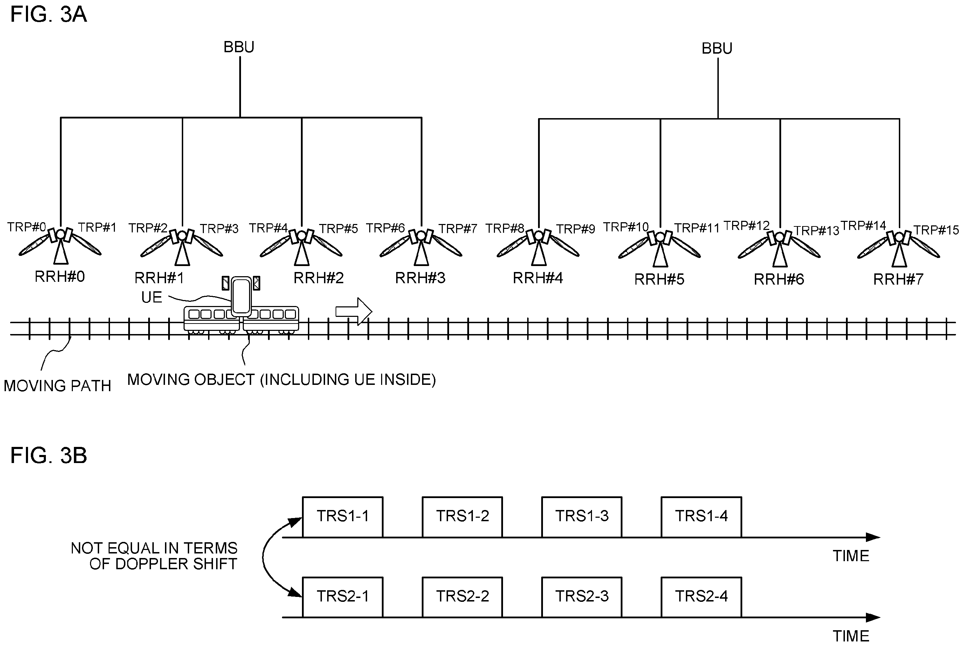

In the example in FIG. 3A, TRPs (TRPs #0, #2, ...) that transmit DL signals in the opposite direction of the HST transmit first TRSs (TRSs arriving from the front direction of the HST) in the same time and frequency resources (SFN). TRPs (TRPs #1, #3, ...) that transmit DL signals in the traveling direction of the HST transmit second TRSs (TRSs arriving from the rear direction of the HST) in the same time and frequency resources (SFN). The first TRS and the second TRS may be transmitted/received by using different frequency resources.

In the example in FIG. 3B, TRSs 1-1 to 1-4 are transmitted as the first TRSs, and TRSs 2-1 to 2-4 are transmitted as the second TRSs.

In consideration of beam management, the first TRSs are transmitted by using 64 beams and 64 time resources, and the second TRSs are transmitted by using 64 beams and 64 time resources. First TRS beams and second TRS beams are considered to be equal (equal in terms of QCL type D RS). By multiplexing the first TRS and the second TRS to the same time resource and different frequency resources, it is possible to increase resource use efficiency.

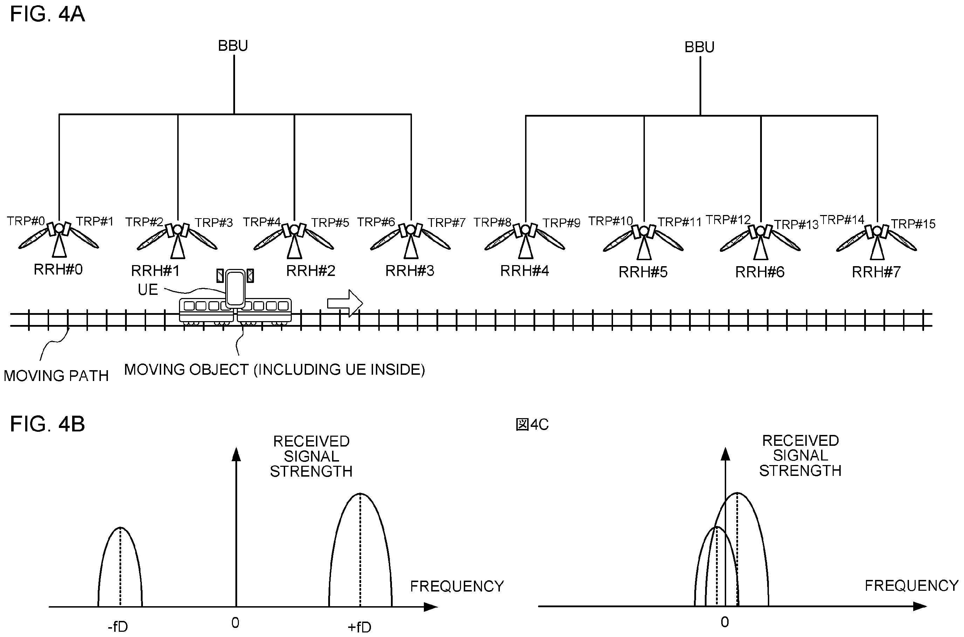

In the example in FIG. 4A, RRHs #0 to #7 are arranged along the moving path of an HST. RRHs #0 to #3 are connected to baseband unit (BBU) #0, and RRHs #4 to #7 are connected to BBU #1. Each of the RRHs is a bidirectional RRH and forms beams in both the traveling direction of the moving path and the opposite direction by using transmission/reception points (TRPs).

Regarding a received signal in the example (single TRP (SFN / scheme 1)) in FIG. 4B, when a UE receives a signal/channel (beam in the traveling direction of the HST, the beam from the rear of the UE) transmitted from TRP #2n-1 (n is an integer equal to or larger than 0), negative Doppler shift (in this example, -fD) occurs. When the UE receives a signal/channel (beam in the opposite direction of the traveling direction of the HST, the beam from the front of the UE) transmitted from TRP #2n (n is an integer equal to or larger than 0), positive Doppler shift (in this example, +fD) occurs.

For Rel. 17 or later versions, it is studied to perform compensation of Doppler shift (which may be referred to as Doppler compensation, pre-Doppler compensation, and a network (NW) pre-compensation scheme) in transmission of a downlink (DL) signal/channel to a UE in an HST from a TRP. By the TRP performing Doppler compensation in advance in performing transmission of a DL signal/channel to the UE, it is possible to reduce an influence of Doppler shift at the time of reception of the DL signal/channel in the UE. In the present disclosure, the NW pre-compensation scheme may be a combination of scheme 1 and Doppler shift pre-compensation by a base station.

In the NW pre-compensation scheme, a TRP that forms a beam on the traveling direction side of a moving path and a TRP that forms a beam on the opposite direction side to the traveling direction of the moving path perform Doppler compensation and then transmit the DL signals/channels to the UE in the HST. In this example, TRP #2n-1 performs positive Doppler compensation, and TRP #2n performs negative Doppler compensation, to thereby reduce an influence of Doppler shift at the time of reception of the signals/channels in the UE (FIG. 4C).

### (Analysis)

Since a UE in Rel. 15/16 does not support the HST function (Rel. 17 or later versions), a base station forms a cell according to an SFN of Rel. 15. Since a UE of a new release (Rel. 17 or later versions) supports the HST function when UE capability supporting the HST function is reported, a base station forms a cell according to the HST function. However, such a case that the base station cannot form an appropriate cell for the UE is conceivable. If an appropriate cell is not formed for the UE, deterioration in communication quality such as degradation in throughput may occur.

Thus, the inventors of the present invention came up with the idea of a method of switching an SFN (Rel. 15) and an HST.

A base station can preferably dynamically switch between the SFN of Rel. 15 and the HST of the new release (HST scheme).

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interpreted interchangeably. In the present disclosure, a cell, a serving cell, a CC, a carrier, a BWP, a DL BWP, a UL BWP, an active DL BWP, an active UL BWP, and a band may be interpreted interchangeably. In the present disclosure, an index, an ID, an indicator, and a resource ID may be interpreted interchangeably. In the present disclosure, a sequence, a list, a set, a group, a cluster, a subset, and the like may be interpreted interchangeably. In the present disclosure, support, control, can control, operate, and can operate may be interpreted interchangeably.

In the present disclosure, configure, activate, update, indicate, enable, specify, and select may be interpreted interchangeably.

In the present disclosure, for example, the higher layer signaling may be any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), an RRC message, and a configuration may be interpreted interchangeably.

The MAC signaling may use, for example, a MAC control element (MAC CE), a MAC Protocol Data Unit (PDU), or the like. In the present disclosure, a MAC CE, an update command, an activation/deactivation command may be interpreted interchangeably.

The broadcast information may be, for example, a master information block (MIB), a system information block (SIB), minimum system information (Remaining Minimum System Information (RMSI), SIB1), other system information (OSI), or the like.

In the present disclosure, a beam, a spatial domain filter, a spatial setting, a TCI state, a UL TCI state, a unified TCI state, a unified beam, a common TCI state, a common beam, a TCI assumption, a QCL assumption, a QCL parameter, a spatial domain receive filter, a UE spatial domain receive filter, a UE receive beam, a DL beam, a DL receive beam, DL precoding, a DL precoder, a DL-RS, an RS having TCI state /QCL assumption of QCL type D, an RS having TCI state / QCL assumption of QCL type A, a spatial relation, a spatial domain transmission filter, a UE spatial domain transmission filter, a UE transmit beam, a UL beam, a UL transmit beam, UL precoding, a UL precoder, and a PL-RS may be interpreted interchangeably. In the present disclosure, a QCL-type-X-RS, a DL-RS associated with QCL type X, a DL-RS having QCL type X, a DL-RS source, an SSB, a CSI-RS, and an SRS may be interpreted interchangeably.

In the present disclosure, a panel, an Uplink (UL) transmission entity, a TRP, a spatial relation, a control resource set (CORESET), a PDSCH, a codeword, a base station, an antenna port of a certain signal (for example, a demodulation reference signal (DMRS) port), an antenna port group of a certain signal (for example, a DMRS port group), a group for multiplexing (for example, a code division multiplexing (CDM) group, a reference signal group, a CORESET group), a CORESET pool, a CORESET subset, a CW, a redundancy version (RV), and a layer (MIMO layer, transmission layer, spatial layer) may be interpreted interchangeably. The panel Identifier (ID) and a panel may be interpreted interchangeably. In the present disclosure, a TRP ID and a TRP may be interpreted interchangeably.

A panel may be related to at least one of a group index of an SSB/CSI-RS group, a group index of group based beam report, and a group index of an SSB/CSI-RS group for group based beam report.

The panel Identifier (ID) and a panel may be interpreted interchangeably. Specifically, a TRP ID and a TRP may be interpreted interchangeably, and a CORESET group ID and a CORESET group may be interpreted interchangeably, for example.

In the present disclosure, a TRP, a transmission point, a panel, a DMRS port group, a CORESET pool, and one of two TCI states associated with one codepoint of a TCI field may be interpreted interchangeably.

In the present disclosure, a single PDCCH (DCI) may be assumed to be supported when a multi-TRP uses ideal backhaul. A multi-PDCCH (DCI) may be assumed to be supported when a multi-TRP uses non-ideal backhaul.

Note that the ideal backhaul may be referred to as DMRS port group type 1, reference signal related group type 1, antenna port group type 1, CORESET pool type 1, and the like. The non-ideal backhaul may be referred to as DMRS port group type 2, reference signal related group type 2, antenna port group type 2, CORESET pool type 2, and the like. The terms are not limited to these.

In the present disclosure, a single-TRP, a single-TRP system, a single TRP transmission, and a single PDSCH may be interpreted interchangeably. In the present disclosure, a multi-TRP, a multi-TRP system, multi-TRP transmission, and a multi-PDSCH may be interpreted interchangeably. In the present disclosure, a single piece of DCI, a single PDCCH, a multi-TRP based on a single piece of DCI, and two TCI states in at least one TCI codepoint being activated may be interpreted interchangeably.

In the present disclosure, a single TRP, a channel using a single TRP, a channel using one TCI state / spatial relation, a multi-TRP being not enabled by RRC/DCI, a plurality of TCI states / spatial relations being not enabled by RRC/DCI, and one CORESET pool index (CORESETPoolIndex) value being not configured for any CORESET while any codepoint of a TCI field being not mapped to two TCI states may be interpreted interchangeably.

In the present disclosure, a multi-TRP, a channel using a multi-TRP, a channel using a plurality of TCI states / spatial relations, a multi-TRP being enabled by RRC/DCI, a plurality of TCI states / spatial relations being enabled by RRC/DCI, and at least one of a multi-TRP based on a single piece of DCI and a multi-TRP based on multi-DCI may be interpreted interchangeably. In the present disclosure, a multi-TRP based on multi-DCI, and one CORESET pool index (CORESETPoolIndex) value being configured for a CORESET may be interpreted interchangeably. In the present disclosure, a multi-TRP based on a single piece of DCI and at least one codepoint of a TCI field being mapped to two TCI states may be interpreted interchangeably.

In the present disclosure, TRP #1 (first TRP) may correspond to CORESET pool index = 0 or correspond to the first TCI state of two TCI states corresponding to one codepoint of a TCI field. TRP #2 (second TRP) TRP #1 (first TRP) may correspond to CORESET pool index = 1 or correspond to the second TCI state of the two TCI states corresponding to the one codepoint of the TCI field.

In the present disclosure, a single piece of DCI (sDCI), a single PDCCH, a multi-TRP system based on a piece of single DCI, an sDCI based MTRP, and two TCI states in at least one TCI codepoint being activated may be interpreted interchangeably.

In the present disclosure, a multi-DCI (mDCI), a multi-PDCCH, a multi-TRP system based on a multi-DCI, and an mDCI based MTRP, two CORESET pool indices or a CORESET pool index being 1 (= 1) (or a value equal to or greater than 1) being configured may be interpreted interchangeably.

In the present disclosure, QCL may be interpreted as QCL type D, and vice versa.

In the present disclosure, "TCI state A has QCL type D, the same as that of TCI state B," "TCI state A is the same as TCI state B," "TCI state A has QCL type D with TCI state B," and the like may be interpreted interchangeably.

In the present disclosure, a DMRS, a DMRS port, and an antenna port may be interpreted interchangeably.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a CSI-RS for tracking, a CSI-RS including TRS information (higher layer parameter trs-Info), an NZP CSI-RS resource in an NZP CSI-RS resource set including TRS information, an NZP-CSI-RS resource in an NZP-CSI-RS resource set constituted of a plurality of NZP-CSI-RS resources of the same antenna port, and TRS resource may be interpreted interchangeably. In the present disclosure, a CSI-RS resource, a CSI-RS resource set, a CSI-RS resource group, and an information element (IE) may be interpreted interchangeably.

In the present disclosure, a codepoint having a DCI field "Transmission Configuration Indication," a TCI codepoint, a DCI codepoint, a codepoint having a TCI field may be interpreted interchangeably.

In the present disclosure, a single TRP and an SFN may be interpreted interchangeably. In the present disclosure, an HST, an HST scheme, a scheme for high-speed moving, scheme 1, scheme 2, and a NW pre-compensation scheme may be interpreted interchangeably.

### (Radio Communication Method)

### <First Embodiment>

A single TRP (SFN) and an HST scheme (scheme 1 / scheme 2 / NW pre-compensation scheme) may be dynamically switched.

In the following, a case where a first embodiment is applied to scheme 1 will be mainly described. However, the first embodiment may be applied to scheme 2 / NW pre-compensation scheme. In other words, in the first embodiment, scheme 1, scheme 2, and a NW pre-compensation scheme may be interpreted interchangeably.

A UE may operate according to Aspects 1-1 to 1-2 below.

### <<Aspect 1-1>>

For the HST scheme (scheme 1 / scheme 2 / NW pre-compensation scheme), two TCI states are configured/indicated.

One or two TCI states can be configured/indicated for each TCI codepoint (TCI field codepoint, DCI codepoint). A method of indicating a TCI state may use an RRC information element / MAC CE (for example, an Enhanced TCI States Activation / Deactivation for UE-specific PDSCH MAC CE) / DCI (TCI field) similarly to a single-DCI based multi-TRP in Rel. 16.

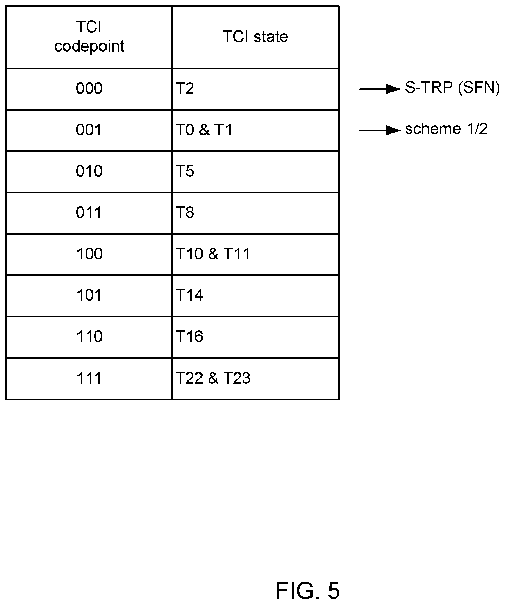

In the example in FIG. 5, a MAC CE indicates (maps) one or two TCI states for each TCI codepoint. A TCI field (for example, in DCI format 1_1/1_2) indicates a TCI codepoint, to indicate one or two TCI states.

When one TCI state is indicated (for example, when TCI codepoint 000 of this example is indicated), the UE may operate in accordance with single-TRP scheme 1.

When two TCI states are indicated (for example, when TCI codepoint 001 of this example is indicated), the UE may operate in accordance with scheme 1 (for example, PDSCH reception).

When scheme 1 is configured by higher layer signaling (or when a plurality of TRS resources are configured), the UE may measure each TRS resource. When use of a plurality of TCI states for reception of a PDSCH/PDCCH is indicated, the UE may operate in accordance with scheme 1 (for example, PDSCH reception). In scheme 1, the UE may measure a plurality of Doppler shifts in a plurality of TRSs, and receive/detect a PDSCH, based on a measurement result.

For each TCI codepoint, one or two TCI states may be mapped. For each TCI codepoint, two TCI states may inevitably be mapped, and the two TCI states (IDs) may be equal. For each TCI codepoint, two TCI states may inevitably be mapped, and the two TCI states (IDs) may be different from each other.

When the two TCI states indicated by the TCI field are equal, the UE may operate (for example, PDSCH reception) in accordance with the single TRP (SFN).

When the two TCI states indicated by the TCI field are equal, the UE may operate (for example, PDSCH reception) in accordance with the HST scheme (scheme 1 / scheme 2 / NW pre-compensation scheme). In this case, the TCI states may be equal between two TRSs.

### <<Variation of Aspect 1-1>>

For scheme 1/2, two TCI states are configured/indicated.

DCI may explicitly indicate whether to use the single TRP (SFN). A TCI codepoint/field indicating whether to use the single TRP (SFN) may be defined to be used or may be indicated by higher layer signaling (RRC information element / MAC CE).

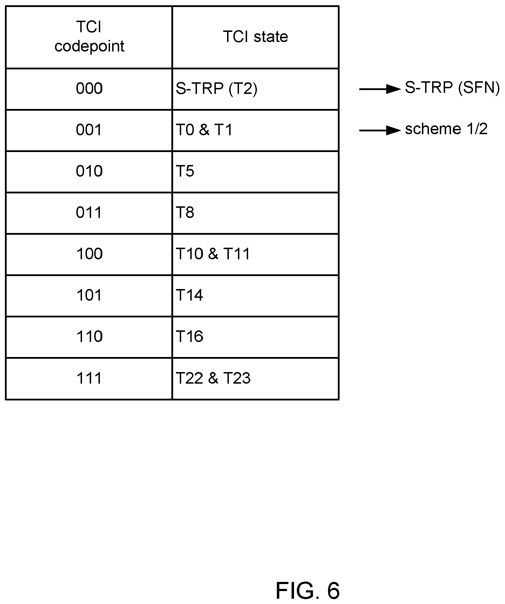

In the example in FIG. 6, the use of the single TRP (SFN) by the lowest TCI codepoint (for example, 000) may be defined in a specification, or mapping of the single TRP (SFN) may be indicated by a MAC CE. For this TCI codepoint, one TCI state for the single TRP may be mapped by the MAC CE.

### <<Aspect 1-2>>

Which one of schemes among the single TRP / scheme 1 / scheme 2 / NW pre-compensation scheme is to be employed depends on DCI (PDCCH) that schedules DL.

The scheme may depend on a DCI format. When the DCI format to schedule a PDSCH is 1_1/1_2, the UE may operate (for example, PDSCH reception) in accordance with scheme 1. When the DCI format to schedule the PDSCH is 1_0, the UE may operate (for example, PDSCH reception) in accordance with the single TRP (SFN).

The scheme may depend on an RNTI used for the DCI (CRC scrambling for DCI). An RNTI for an HST may be defined in a specification. The UE may switch schemes according to an RNTI with which the CRC of the DCI to schedule the PDSCH is scrambled. When the PDSCH is scheduled by the DCI having CRC scrambled with the RNTI for the HST, the UE may operate (for example, PDSCH reception) in accordance with a specific scheme (for example, scheme 1).

The scheme may depend on a combination of a plurality of DCI fields. When the value of each of the plurality of special fields is a special value defined in a specification, the UE may operate (for example, PDSCH reception) in accordance with a specific scheme (for example, scheme 1).

The scheme may depend on the CORESET in which DCI (PDCCH) to schedule a PDSCH is received. When DCI to schedule a PDSCH is received in a UE-specific CORESET, the UE may operate (for example, PDSCH reception) in accordance with a first scheme (for example, scheme 1). When DCI to schedule a PDSCH is received in a common CORESET, the UE may operate (for example, PDSCH reception) in accordance with a second scheme (for example, the single TRP (SFN)).

The scheme may depend on the search space in which the DCI (PDCCH) to schedule a PDSCH is received. When the DCI to schedule the PDSCH is received in a UE-specific search space (USS), the UE may operate (for example, PDSCH reception) in accordance with the first scheme (for example, scheme 1). When the DCI to schedule the PDSCH is received in a common search space (CSS), the UE may operate (for example, PDSCH reception) in accordance with the second scheme (for example, the single TRP (SFN)).

According to this embodiment, the base station / UE can dynamically switch between the single TRP (SFN) and scheme 1/2 / NW pre-compensation scheme.

### <Second Embodiment>

The single TRP (SFN) and the NW pre-compensation scheme may be dynamically switched. In other words, the first embodiment may be applied to switching between the single TRP (SFN) and the NW pre-compensation scheme.

In the NW pre-compensation scheme, the UE the UE notified of a TCI state may assume that a received signal is compensated by frequency compensation in PDSCH reception.

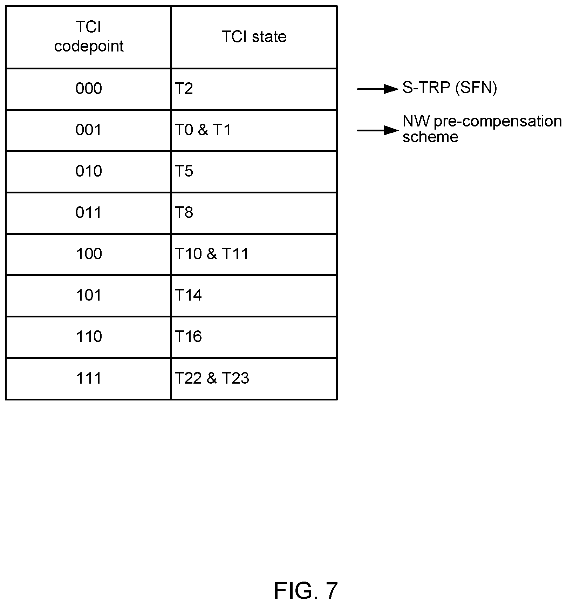

In the example in FIG. 7, a MAC CE indicates (maps) one or two TCI states for each TCI codepoint. A TCI field (for example, in DCI format 1_1/1_2) indicates a TCI codepoint, to indicate one or two TCI states.

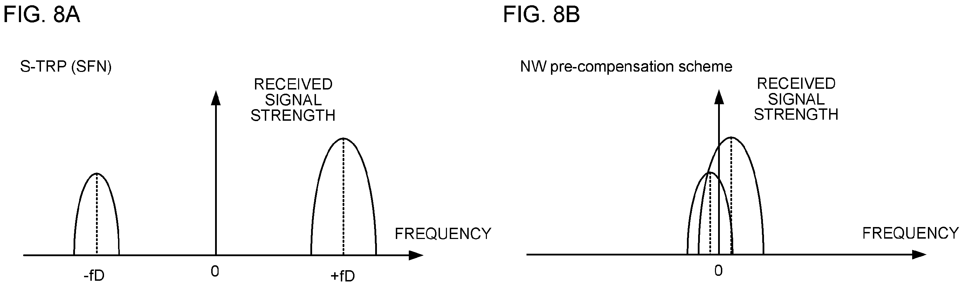

When one TCI state is indicated (for example, when TCI codepoint 000 of this example is indicated), the UE may operate in accordance with the single TRP (SFN) and assume to receive a PDSCH/DMRS not compensated by frequency compensation (FIG. 8A) (need not necessarily assume to receive a PDSCH/DMRS compensated by frequency compensation).

When two TCI states are indicated (for example, when TCI codepoint 001 of this example is indicated), the UE may operate in accordance with scheme 1 and assume to receive a PDSCH/DMRS compensated by frequency compensation (FIG. 8B).

According to this embodiment, the base station / UE can dynamically switch between the single TRP (SFN) and the NW pre-compensation scheme.

### <Third Embodiment>

Scheme 1/2 and the NW pre-compensation scheme may be dynamically switched.

In the following, description will be given of a case where a third embodiment is applied to switching of between scheme 1/2 and the NW pre-compensation scheme. However, the third embodiment may be applied to switching between at least two of scheme 1, scheme 2, and NW pre-compensation scheme. In other words, in the third embodiment, scheme 1, scheme 2, and the NW pre-compensation scheme may be interpreted interchangeably.

Any of scheme 1/2 and the NW pre-compensation scheme is to be used may depend on a TCI codepoint.

The UE may operate according to at least one of Aspects 3-1 and 3-2 below.

### <<Aspect 3-1>>

For each TCI codepoint, which one of scheme 1/2 and the NW pre-compensation scheme corresponds to the TCI codepoint may be configured/indicated by higher layer signaling (RRC information element / MAC CE) or may be defined in a specification.

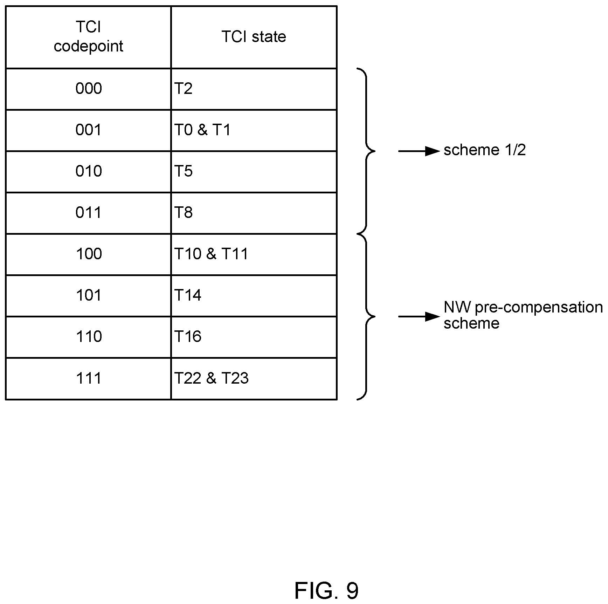

In the example in FIG. 9, TCI codepoints 000 to 011 are associated with scheme 1/2, while TCI codepoints 100 to 111 are associated with the NW pre-compensation scheme. The UE operates (for example, PDSCH reception) in accordance with the scheme corresponding to the TCI codepoint.

When the base station can know appropriate Doppler shift, the NW pre-compensation scheme is likely to achieve the best performance, and otherwise, the performance of scheme 1 is likely to be higher than the performance of the NW pre-compensation scheme. It is preferable that the base station dynamically switch between scheme 1/2 and the NW pre-compensation scheme according to a CSI report value / SRS reception state for the base station to obtain Doppler shift.

### {{Aspect 3-2}}

Which one of scheme 1/2 and the NW pre-compensation scheme is to be used may depend on at least one of the number of TCI states associated with the TCI codepoint, the type associated with the TCI codepoint, the QCL type in a TCI state associated with the TCI codepoint, a higher layer parameter associated with a TCI state associated with the TCI codepoint, and a higher layer parameter associated with the TCI code point.

For example, a parameter indicating which one of scheme 1/2 and the NW pre-compensation scheme is to be used may be associated with each TCI codepoint by higher layer signaling.

For example, the QCL type in a TCI state mapped to a TCI codepoint may be different for each of scheme 1/2 and the NW pre-compensation scheme. The UE may operate (for example, PDSCH reception) in accordance with the scheme corresponding to the QCL type in the TCI state mapped to the TCI codepoint.

According to this embodiment, the base station / UE can dynamically switch between scheme 1/2 and the NW pre-compensation scheme.

### <Fourth Embodiment>

The UE may operate according to at least one of Aspects 4-1 and 4-2 below.

### <<Aspect 4-1>>

Any of the HST schemes (scheme 1 / scheme 2 / NW pre-compensation scheme) is configured, the UE uses a plurality of TCI states / QCLs for PDSCH reception.

A plurality of TCI states may be configured/indicated per PDSCH by an RRC information element / MAC CE / DCI.

Similarly to the method of indicating TCI states of single-DCI based multi-TRP of Rel. 16, a plurality of TCI states per PDSCH may be configured/indicated.

One or two TCI states may be activated for each TCI codepoint by a MAC CE of Rel. 16 (for example, an Enhanced TCI States Activation/Deactivation for UE-specific PDSCH MAC CE), and one TCI codepoint may be indicated by DCI (TCI field).

If no TCI-present-in-DCI parameter (tci-PresentInDCI) is configured or if a time offset from DCI to a PDSCH (scheduling offset) is smaller than a threshold (timeDurationForQCL), the UE may operate (for example, PDSCH reception) by using at least one TCI state (default TCI state) from TCI states 1 to 3 below.

### {TCI State 1}

The TCI state corresponds to the lowest TCI codepoint with two active TCI states (similarly to Rel. 16).

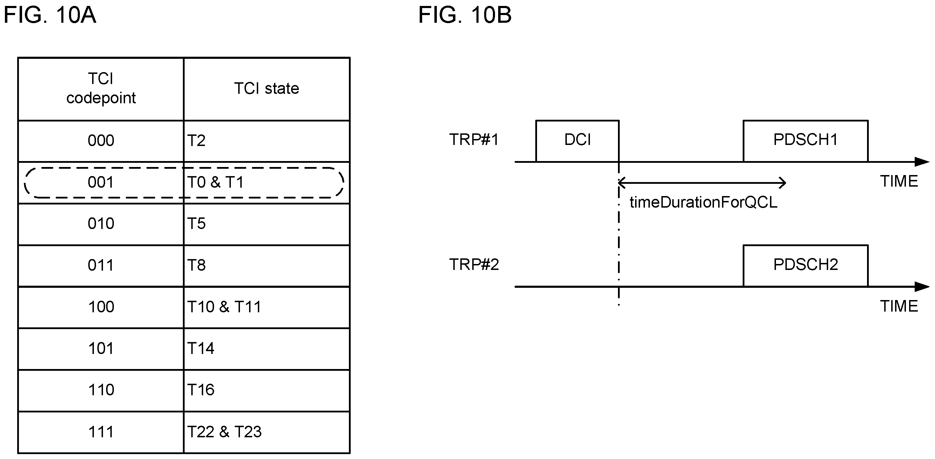

In the example in FIG. 10A, a plurality of TCI states are configured by RRC, and TCI state(s) corresponding to each codepoint in the TCI field are activated by a MAC CE (for example, an Enhanced TCI states Activation/Deactivation for UE-specific PDSCH MAC CE). In the example in FIG. 10B, DCI schedules PDSCH 1 from TRP #1 and a PDSCH from TRP #2. When a time offset between the DCI and each of PDSCHs 1 and 2 is smaller than a threshold (timeDurationForQCL), the UE uses the two active TCI states (T0 and T1) corresponding to the lowest codepoint (001) among TCI codepoints with two active TCI states, for reception of respective PDSCHs 1 and 2.

### {TCI State 2}

The TCI state corresponds to one or two active TCI states corresponding to the lowest TCI codepoint.

### {TCI State 3}

The TCI state corresponds to two active TCI state IDs (two active TCI state IDs including the lowest TCI state ID among two active TCI states).

To cause the default TCI state for a PDSCH of an HST to operate, the UE may assume that a plurality of TCI states are activated for at least one TCI codepoint. For example, in TCI state 3 described above, two TCI states may inevitably be activated for at least one TCI codepoint.

For a PDSCH scheduled by a DCI format with no TCI field (or for which no TCI field can be configured) (for example, DCI format 1_0), the UE may assume one of assumptions 1 and 2 below.

### {Assumption 1}

The UE assumes a single TRP.

### {Assumption 2}

The UE assumes an HST scheme (scheme 1 / scheme 2 / NW pre-compensation scheme). The TCI state in this case may be the default TCI state described above.

### <<Aspect 4-2>>

When any of the HST schemes (scheme 1 / scheme 2 / NW pre-compensation scheme) is configured/used, the UE assumes one TCI state / QCL / spatial relation / SRI for transmission of an SRS/PUCCH/PUSCH.

One TCI state / QCL / spatial relation / SRI may be configured per SRS/PUCCH/PUSCH resource by an RRC information element / MAC CE / DCI.

If no spatial relation is configured, a spatial relation may be according to the following procedure.

### {Procedure}

The UE may assume a TCI state of the lowest CORESET ID for a CC configured with a CORESET and may assume a TCI state with the lowest active TCI state ID of PDSCH TCI states for a CC configured with no CORESET (similarly to Rel. 16).

The "lowest active TCI state ID of PDSCH TCI states" described above may be one or two active TCI states. When the "the lowest active TCI state ID of the PDSCH TCI state" is two active TCI states, the UE may determine one TCI state to be used for a spatial relation / PL-RS in accordance with a rule. For example, this one TCI state may be the TCI state configured first or may be the TCI state with a lower TCI state ID of the two TCI states.

If a plurality of TCI states are configurable for a CORESET, the "TCI state of the lowest CORESET ID" may be one or two active TCI states. When the "TCI state of the lowest CORESET ID" is one or two active TCI states, the UE may determine one TCI state to be used for a spatial relation / PL-RS in accordance with a rule. For example, this one TCI state may be the TCI state configured first or may be the TCI state with a lower TCI state ID of the two TCI states.

According to this embodiment, it is possible for the UE to appropriately determine a DL/UL TCI state.

### <Other Embodiments>

A higher layer parameter (RRC IE) / UE capability corresponding to at least one function (characteristics, feature) of the plurality of embodiments above may be defined. The UE capability may indicate to support this function.

The UE configured with a higher layer parameter corresponding to this function (activating this function) may perform the function. The "UE configured with no higher layer parameter corresponding to the function does not perform the function (for example, operates according to Rel. 15/16)" may be defined.

The UE that has reported UE capability indicating support of the function may perform the function. The "UE configured that has not reported UE capability indicating support of the function does not perform the function (for example, operates according to Rel. 15/16)" may be defined.

When the UE reports UE capability indicating support of the function and is configured with a higher layer parameter corresponding to the function, the UE may perform the function. "When the UE does not report UE capability indicating support of the function or is not configured with a higher layer parameter corresponding to the function, the UE does not perform the function (for example, operates according to Rel. 15/16)" may be defined.

The UE capability may indicate whether the UE supports this function.

The UE capability may indicate whether to support an HST (HST scheme).

The UE capability may indicate whether to support scheme 1 / scheme 2 / NW pre-compensation scheme.

The UE capability may indicate the maximum number of QCLs configured for the same DMRS port.

In at least one of the plurality of embodiments above, the maximum number of QCLs configured for the same DMRS port may be two. In a specification, the maximum number of QCLs configured for the same DMRS port may be larger than two.

Scheme 1 / scheme 2 / NW pre-compensation scheme may be defined in a specification, and indication/switching of schemes may be performed by an RRC information element / MAC CE / DCI.

According to the embodiments above, the UE can perform the function while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

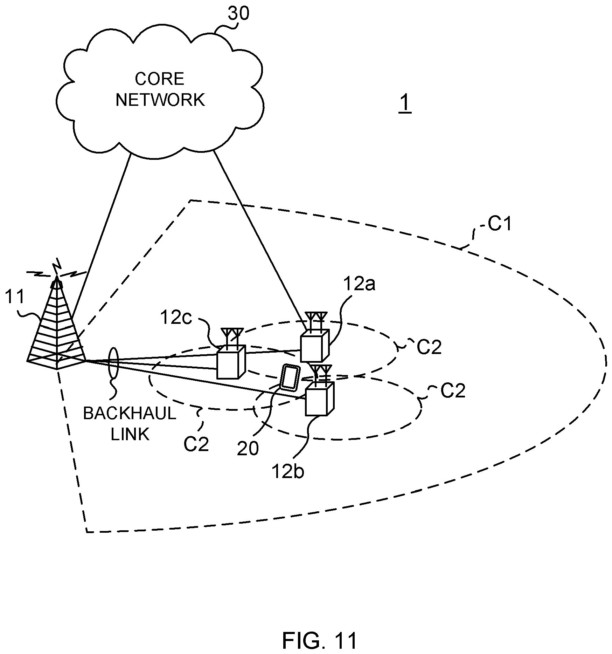

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

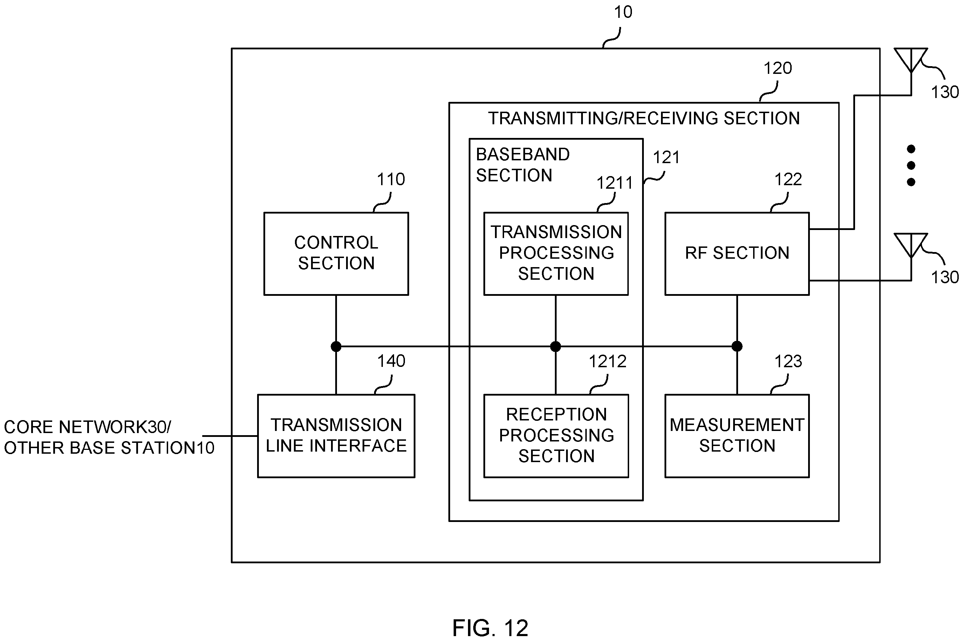

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the control section 110 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may determine downlink control information to schedule a physical downlink shared channel. The transmitting/receiving section 120 may transmit the downlink control information, based on whether to apply a scheme for high-speed moving to the physical downlink shard channel.

### (User Terminal)

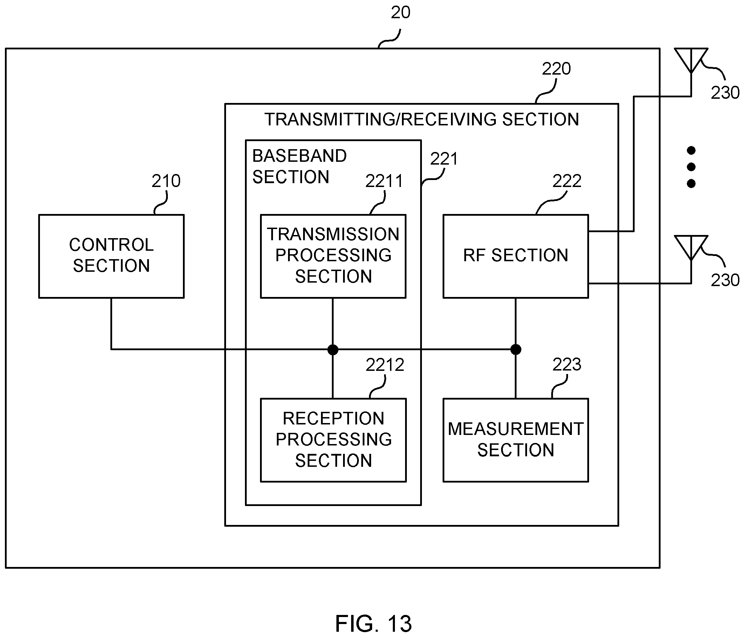

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information (DCI, PDCCH) to schedule a physical downlink shared channel (PDSCH). The control section 210 may determine whether to apply a scheme for high-speed moving (HST scheme) to the physical downlink shard channel, based on the downlink control information.

When the downlink control information indicate a plurality of different transmission configuration indication (TCI) states, the control section 210 may determine that the scheme for high-speed moving is applied to the physical downlink shared channel (first/second embodiment).

The control section 210 may determine whether Doppler shift of the physical downlink shared channel is compensated in advance (whether a NW pre-compensation scheme is applied to the PDSCH), based on the downlink control information (third embodiment).

When the downlink control information does not include a TCI field or when a time offset from the downlink control information to the physical downlink shared channel is smaller than a threshold in a case where the scheme for high-speed moving is applied to the physical downlink shared channel, the control section 210 may determine a TCI state of the physical downlink shared channel, based on at least one of a specific TCI codepoint and a specific TCI state ID (fourth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

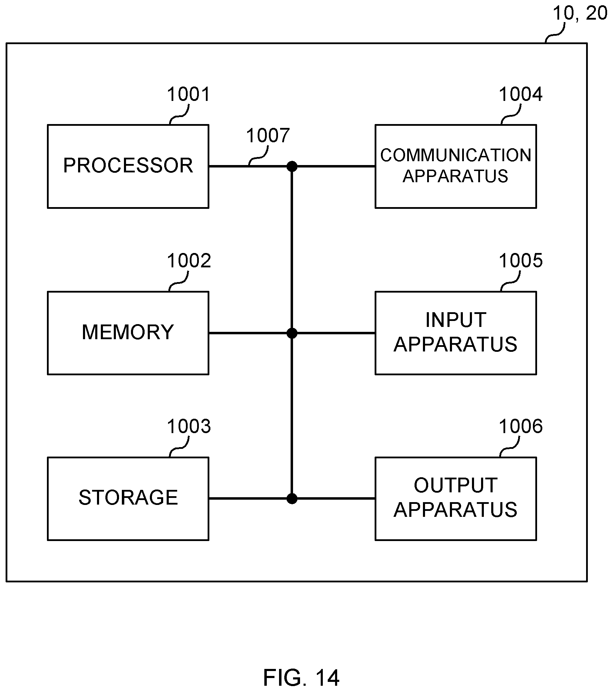

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on JP 2021-015942 filed on February 3, 2021. The entire content of this application is incorporated herein.

## Claims

1. A terminal comprising:
a receiving section that receives downlink control information to schedule a physical downlink shared channel; and
a control section that determines whether to apply a scheme for high-speed moving to the physical downlink shared channel, based on the downlink control information.

2. The terminal according to claim 1, wherein
when the downlink control information indicates a plurality of different transmission configuration indication (TCI) states, the control section determines that the scheme for high-speed moving is applied to the physical downlink shared channel.

3. The terminal according to claim 1 or 2, wherein
the control section determines whether Doppler shift of the physical downlink shared channel is compensated in advance, based on the downlink control information.

4. The terminal according to any one of claims 1 to 3, wherein
when the downlink control information does not include a TCI field or when a time offset from the downlink control information to the physical downlink shared channel is smaller than a threshold in a case where the scheme for high-speed moving is applied to the physical downlink shared channel, the control section determines a TCI state of the physical downlink shared channel, based on at least one of a specific TCI codepoint and a specific TCI state ID.

5. A radio communication method for a terminal, the radio communication method comprising:
receiving downlink control information to schedule a physical downlink shared channel; and
determining whether to apply a scheme for high-speed moving to the physical downlink shared channel, based on the downlink control information.

6. A base station comprising:
a control section that determines downlink control information to schedule a physical downlink shared channel; and
a transmitting section that transmits the downlink control information, based on whether to apply a scheme for high-speed moving to the physical downlink shard channel.
